# EUROPEAN PATENT APPLICATION

(11) **EP 3 854 696 A1**
(43) Date of publication of application: **28.07.2021**
(21) Application number: 21153191.8
(22) Date of filing: 25.01.2021
(51) Int. Cl.: B64D 47/06

(54) **SYSTEMS AND METHODS FOR AIRCRAFT ANTI-COLLISION LIGHT CONTROL**

(30) Priority: 24.01.2020 US 202016751624
(71) Applicant: B/E Aerospace, Inc., Winston Salem, NC 27105 (US)
(72) Inventor: BIONDI, William J., Milwaukee, WI Wisconsin 53214-3929 (US); NELSON, James, Lake Villa, IL Illinois 60046 (US)
(74) Representative: Dehns

(57) **Abstract**

An anti-collision light (ACL) control system may include a controller (202), a GPS receiver (204) in electronic communication with the controller, an ACL (400) comprising a housing (402) and a flash lamp (404) in electronic communication with the controller, and a tangible, non-transitory memory configured to communicate with the controller, the tangible, non-transitory memory having instructions stored thereon that, in response to execution by the controller, cause the controller to perform operations comprising receiving a GPS signal from the GPS receiver, generating a flash signal in response to the GPS signal, and controlling the flash lamp via the flash signal.

## Description

### FIELD

The present disclosure relates generally to aircraft systems and, more particularly, to aircraft exterior lighting systems.

### BACKGROUND

Aircraft are generally equipped with a plurality of Anti-Collision Lights (ACLs) which may strobe or flash in sequence during flight. The sequence and frequency of ACL strobing may be governed according to variously regulatory and safety guidelines which may further require synchronization of strobing across each of the plurality of ACLs. In this regard, the aircraft may tend to be more visible at night and in adverse weather conditions. Traditional ACL synchronization methods tend to rely on either a "master-slave" configuration or a "dominant-light" configuration. In the master-slave configuration, one ACL serves as a master and generates and transmits a flash signal to each of the other ACLs (the slaves) which flash in response to the master flash signal. In the dominant-light configuration, one of the plurality of ACLs receives a first power signal. In response to the first power signal, the ACL generates the flash signal and transmits the flash signal to the plurality of ACLs

### SUMMARY

In various embodiments, an anti-collision light (ACL) control system comprises a controller, a GPS receiver in electronic communication with the controller, an ACL comprising a housing and a flash lamp in electronic communication with the controller, and a tangible, non-transitory memory configured to communicate with the controller, the tangible, non-transitory memory having instructions stored thereon that, in response to execution by the controller, cause the controller to perform operations comprising receiving a GPS signal from the GPS receiver, generating a flash signal in response to the GPS signal, and controlling the flash lamp via the flash signal.

In various embodiments, the operations further comprise extracting a real time stream from the GPS signal, calculating an ACL duty cycle based on the real time stream, and generating the flash signal based on the ACL duty cycle. In various embodiments, a receiving element may be in electronic communication with the ACL and disposed within the housing. In various embodiments, the operations further comprise encoding the flash signal and transmitting the encoded flash signal to the receiving element. In various embodiments, the receiving element comprises at least one of a wireless receiver or a data over powerline modem. In various embodiments, each of the controller and the GPS receiver are disposed within the housing. In various embodiments, the ACL comprises a light emitting diode (LED) flash lamp. In various embodiments, a LED driver module may be configured to control the LED flash lamp and in electronic communication with the controller, wherein the controller transmits the flash signal to the LED driver module. In various embodiments, a navigation lamp may be disposed within the housing. In various embodiments, the operations further comprise receiving a navigation power sense signal and inhibiting generation of the flash signal in response to the navigation power sense signal.

In various embodiments, an article of manufacture is disclosed including a tangible, non-transitory computer-readable storage medium having instructions stored thereon that, in response to execution by a processor, cause the processor to perform operations comprising receiving a GPS signal, generating a flash signal in response to the GPS signal, and controlling a flash lamp via the flash signal.

In various embodiments, the operations further comprise extracting a real time stream from the GPS signal, calculating an ACL duty cycle based on the real time stream, and generating the flash signal based on the ACL duty cycle. In various embodiments, the operations further comprise encoding the flash signal and transmitting the encoded flash signal to a receiving element. In various embodiments, the operations further comprise receiving a navigation power sense signal and inhibiting the generation of the flash signal in response to the navigation power sense signal.

In various embodiments, a method of controlling an anti-collision light may comprise receiving a GPS signal, generating a flash signal in response to the GPS signal, and controlling a flash lamp via the flash signal. The method includes extracting a real time stream from the GPS signal, calculating an ACL duty cycle based on the real time stream, and generating the flash signal based on the ACL duty cycle. In various embodiments, the method includes encoding the flash signal and transmitting the encoded flash signal to a receiving element. In various embodiments, the method includes receiving a navigation power sense signal and inhibiting the generation of the flash signal in response to the navigation power sense signal.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an exemplary aircraft, in accordance with various embodiments;
FIG. 2 illustrates an anti-collision light control system, in accordance with various embodiments;
FIG. 3 illustrates a method of anti-collision light control, in accordance with various embodiments; and
FIG. 4 illustrates a block diagram of an anti-collision light including an anti-collision light control system, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation.

The scope of the disclosure is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

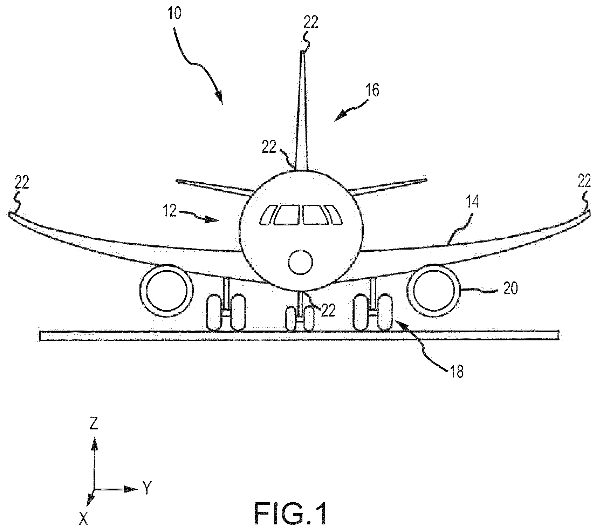

With reference to FIG. 1, an aircraft 10 is illustrated in accordance with various embodiments. Aircraft 10 comprises a fuselage 12, wings 14, empennage 16, landing gear 18, a propulsion system, such as gas turbine engines 20, and a plurality of exterior lights 22. Exterior lights 22 may include any number of lights know to those skilled in the art such as, for example, navigation lights, logo lights, wing scan lights, runway turnoff lights, cargo loading lights, engine scan lights, Anti-Collision Lights (ACLs), beacon lights, and/or the like. It will be appreciated that the number and location of the exterior lights 22 are exemplary and aircraft 10 may include any number of additional lights which may be beneficial to operation of aircraft 10 but are not illustrated. In various embodiments, aircraft 10 includes an ACL control system 200.

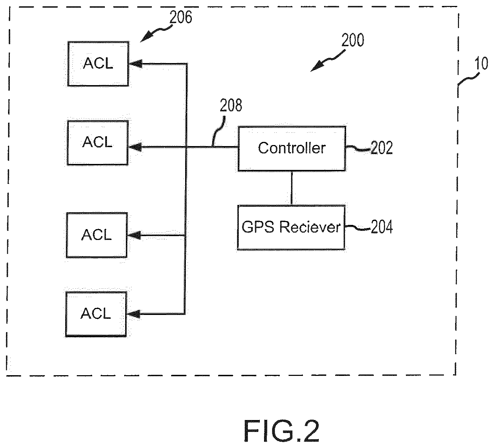

With additional reference to FIG. 2, an ACL control system 200 is illustrated aboard aircraft 10. System 200 includes a controller 202 in electronic communication with a GPS receiver 204 and a plurality of ACLs 206. In various embodiments, controller 202 may be configured as a central network element or hub to access various systems, engines, and components of system 200. Controller 202 may comprise a network, computer-based system, and/or software components configured to provide an access point to various systems, engines, and components of system 200. In various embodiments, controller 202 may comprise a processor. In various embodiments, controller 202 may be implemented in a single processor. In various embodiments, controller 202 may be implemented as and may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. Controller 202 may comprise a processor configured to implement various logical operations in response to execution of instructions, for example, instructions stored on a non-transitory, tangible, computer-readable medium configured to communicate with controller 202. In this regard, controller 202 may be configured to control various components of system 200 via control signals 208.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

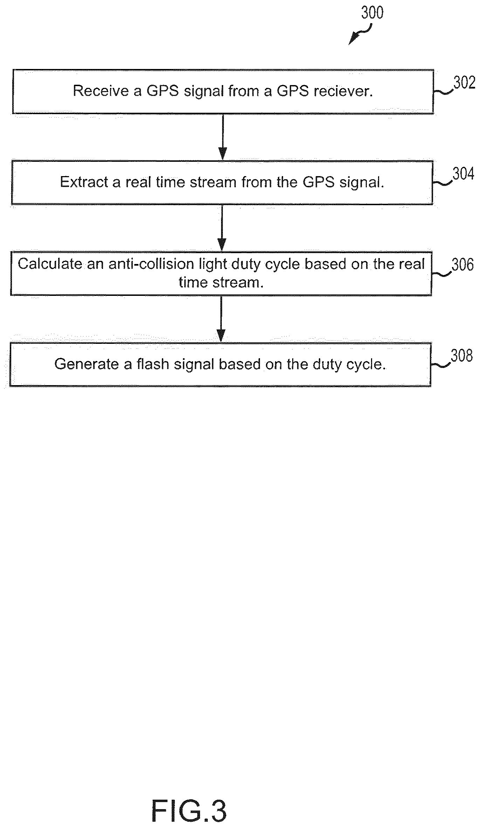

In various embodiments and with additional reference to FIG. 3 a method 300 of controlling an ACL is illustrated in accordance with various embodiments. Method 300 includes receiving a GPS signal from a GPS receiver (step 302). For example, controller 202 may receive a GPS signal from the GPS receiver 204. Method 300 includes extracting a real time stream from the GPS signal (step 304). Method 300 includes calculating an ACL duty cycle based on the real time stream (step 306). Method 300 includes generating a flash signal based on the ACL duty cycle and transmitting the flash signal to an ACL (step 308). For example, controller 202 may generate the flash signal and transmit the flash signal as control signals 208 to the plurality of ACLs 206. In various embodiments, controller 202 may encode the flash signal and transmit the encoded flash signal as control signals 208 to a corresponding receiving elements of the plurality of ACLs 206. In this regard, the controller may generate the flash signal in response to the GPS signal. The ACLs 206 may each comprise a flash lamp configured to flash in response to the flash signal and, thereby, the controller 202 may control each of the flash lamps of the plurality of ACLs 206 via the flash signal.

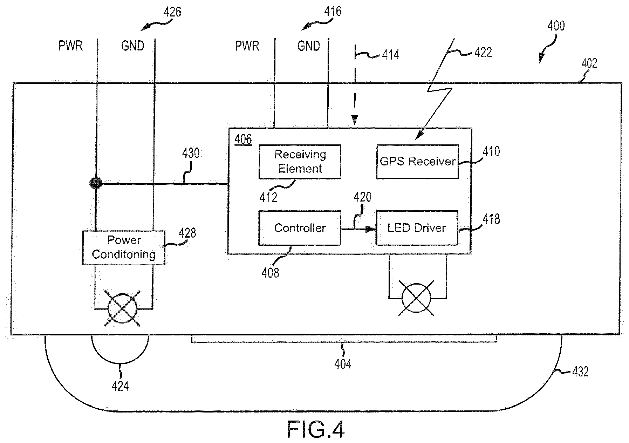

In various embodiments, and with additional reference to FIG. 4, an ACL 400 is illustrated. In various embodiments, ACL 400 may be one of the plurality of ACLs 206. ACL 400 comprises a housing 402 and a flash lamp 404 disposed in the housing. Flash lamp 404 may be protected from environmental effects by a protective lens 432 coupled to the housing 402. An ACL control system 406 may be disposed in the housing. The ACL control system 406 comprises a controller 408 which may comprise various features, materials, geometries, construction, manufacturing techniques, and/or internal components similar to controller 202. Controller 408 may be in electronic communication with a GPS receiver 410 the flash lamp 404. In various embodiments, the flash lamp 404 may be of a light emitting diode (LED) type (i.e., an LED flash lamp). The controller 408 may be in electronic communication with an LED driver 418 module configured to control the LED flash lamp. In various embodiments, controller 408 may be in electronic communication with a receiving element 412 such as, for example, a data over powerline modem, a network interface controller, a wireless chip (e.g., Bluetooth, 802.11, etc.) and/or the like.

Controller 408 may receive an encoded flash signal 414 (i.e., an externally generated flash signal or a flash command from a first controller such as controller 202) via the receiving element 412. The encoded flash signal 414 may be received wirelessly or by hardline such as, for example as data over powerline via ACL power lines 416. The controller 408 may control the flash lamp 404 in response to the encoded flash signal 414 by, for example, decoding the encoded flash signal and in causing the flash lamp 404 to strobe at a frequency between 30 Hz to 45 Hz. For example, the controller 408 may generate a flash signal 420 (i.e. an internal flash signal) in response to the encoded flash signal 414 and transmit the flash signal 420 to the LED driver 418. In various embodiments, the controller 408 may receive a GPS signal 422 from the GPS receiver 410 and extract a real time stream from the GPS signal 422. The Controller 408 may calculate an ACL duty cycle based on the real time stream and generate the flash signal 420 based on the ACL duty cycle. In various embodiments, ACL 400 includes a navigation lamp 424. Navigation lamp 424 may receive power from navigation power lines 426. Navigation lamp 424 may receive power via a power conditioning module 428 configured to provide a conditioned power to the navigation lamp 424. In various embodiments, controller 408 may receive a navigation power sense signal 430 from, for example, the power conditioning module 428 or the navigation power lines 426. In response to the navigation power sense signal 430, controller 408 may inhibit generation of the flash signal 420.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An anti-collision light, ACL, control system, comprising:
a controller (202);
a GPS receiver (204) in electronic communication with the controller;
an ACL (400) comprising a housing (402) and a flash lamp (404) in electronic communication with the controller; and
a tangible, non-transitory memory configured to communicate with the controller, the tangible, non-transitory memory having instructions stored thereon that, in response to execution by the controller, cause the controller to perform operations comprising:
receiving, by the controller, a GPS signal from the GPS receiver;
generating, by the controller, a flash signal in response to the GPS signal; and
controlling, by the controller, the flash lamp via the flash signal.

2. The control system of claim 1, wherein the operations further comprise:
extracting, by the controller, a real time stream from the GPS signal;
calculating, by the controller, an ACL duty cycle based on the real time stream; and
generating, by the controller, the flash signal based on the ACL duty cycle.

3. The control system of claim 1 or 2, further comprising a receiving element (412) in electronic communication with the ACL and disposed within the housing.

4. The control system of claim 3, wherein the operations further comprise:
encoding, by the controller, the flash signal; and
transmitting, by the controller, the encoded flash signal to the receiving element.

5. The control system of claim 3, wherein the receiving element comprises at least one of a wireless receiver or a data over powerline modem.

6. The control system of any preceding claim, wherein each of the controller and the GPS receiver are disposed within the housing.

7. The control system of any preceding claim, wherein the ACL comprises a light emitting diode, LED, flash lamp, and optionally further comprising a LED driver module (418) configured to control the LED flash lamp and in electronic communication with the controller, wherein the controller transmits the flash signal to the LED driver module.

8. The control system of any preceding claim, further comprising a navigation lamp (424) disposed within the housing.

9. The control system of any preceding claim, wherein the operations further comprise:
receiving, by the controller, a navigation power sense signal; and
inhibiting, by the controller, generation of the flash signal in response to the navigation power sense signal.

10. An article of manufacture including a tangible, non-transitory computer-readable storage medium having instructions stored thereon that, in response to execution by a processor, cause the processor to perform operations comprising:
receiving, by the processor, a GPS signal;
generating, by the processor, a flash signal in response to the GPS signal; and
controlling, by the processor, a flash lamp via the flash signal.

11. The article of manufacture of claim 10, wherein the operations further comprise:
extracting, by the processor, a real time stream from the GPS signal;
calculating, by the processor, an ACL duty cycle based on the real time stream; and
generating, by the processor, the flash signal based on the ACL duty cycle.

12. The article of manufacture of claim 10, wherein the operations further comprise:
encoding, by the processor, the flash signal; and
transmitting, by the processor, the encoded flash signal to a receiving element, and/or wherein the operations further comprise:
receiving, by the processor, a navigation power sense signal; and
inhibiting, by the processor, generation of the flash signal in response to the navigation power sense signal.

13. A method of controlling an anti-collision light, ACL, comprising:
receiving, by a controller, a GPS signal from a GPS receiver in electronic communication with the controller;
generating, by the controller, a flash signal in response to the GPS signal; and
controlling, by the controller, a flash lamp in electronic communication with the controller via the flash signal.

14. The method of claim 13, further comprising:
extracting, by the controller, a real time stream from the GPS signal;
calculating, by the controller, an ACL duty cycle based on the real time stream; and
generating, by the controller, the flash signal based on the ACL duty cycle.

15. The method of claim 13, further comprising:
encoding, by the controller, the flash signal; and
transmitting, by the controller, the encoded flash signal to a receiving element;
and/or further comprising:
receiving, by the controller, a navigation power sense signal; and
inhibiting, by the controller, generation of the flash signal in response to the navigation power sense signal.
